# EUROPEAN PATENT APPLICATION

(11) **EP 2 645 242 A2**
(43) Date of publication of application: **02.10.2013**
(21) Application number: 13161730.0
(22) Date of filing: 28.03.2013
(51) Int. Cl.: G06F 9/44, G06F 9/50, G06F 9/54

(54) **Control of programs in parallel processing systems**

(30) Priority: 29.03.2012 GB 201205617
(71) Applicant: U-blox Melbourn Ltd, Royston Hertfordshire SG8 6HB (GB)
(72) Inventor: Uygun, Erkut, Cambridge, Cambridgeshire CB23 7UY (GB); Tindall, Paul, Bedford, Bedfordshire MK41 0LP (GB); Haine, John, Cambridge, Cambridgeshire CB21 4RQ (GB); Guffens, Jan, Lubbeek, B-3210 (BE)
(74) Representative: Gillard, Matthew Paul

(57) **Abstract**

A multiprocessor computer that has control functionality for controlling how tasks are allocated to various processing units and in which part of the control functionality is reserved for performing one task and another part is reserved for performing another task.

## Description

### Field

The invention relates to digital data processing systems.

### Background

The applicants of the present application also filed the United Kingdom patent application that has been published under publication number GB 2482141 A and which has Chinese and US equivalents published under publication numbers CN 102339223 A and US 2012/0023317 A1, respectively. Much of the teaching of GB 2482141 A is reproduced below for ease of reference.

Unified Modelling Language (UML) can be used to describe systems. A common use of UML is to provide a description of a system that is to be implemented in software. Traditionally, an analyst will study a system that is proposed for implementation in software and produce a UML description of the system. A programmer will then work from the UML description provided by the analyst in order to produce software that implements the system whilst complying with the constraints of the particular architecture of the computing hardware that is to execute the software. Some examples of such constraints are the amount of memory in the computing hardware and the number and processing speed of the processors in the computing hardware.

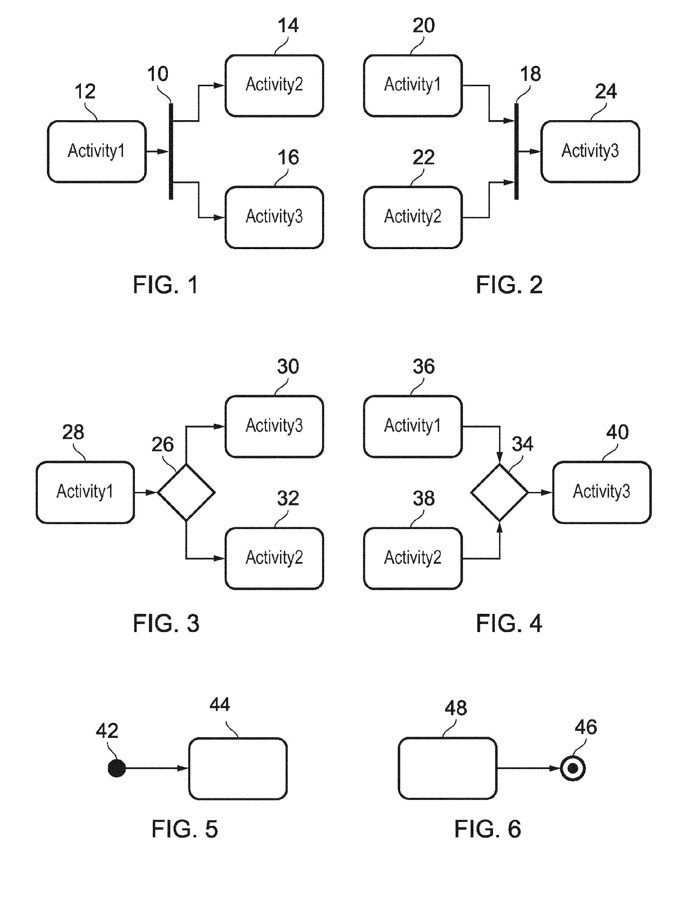

UML provides a range of methods for describing systems. One such method is the use of activity diagrams. An activity diagram describes a system in terms of activities and control flows between the activities. The control flows are represented by a set of primitives, and these primitives will now be described by reference to figures 1 to 6.
Figure 1 shows an activity diagram primitive that is called the fork node. Here a fork node 10 describes the relationship between activities 12, 14 and 16. The fork node 10 indicates that upon completion of activity 12, activities 14 and 16 are commenced concurrently.
Figure 2 shows an activity diagram primitive that is called the join node. Here, a join node 18 describes the relationship between activities 20, 22 and 24. The join node 18 indicates that upon completion of both activities 20 and 22, activity 24 is commenced. Thus, the join node primitive has a synchronising effect, in that it allows an activity to commence only after a plurality of other activities have finished.
Figure 3 shows an activity diagram primitive that is called the decision node. Here, a decision node 26 describes the relationship between activities 28, 30 and 32. The decision node 26 indicates that upon completion of activity 28, only one of activities 30 and 32 is commenced. Which one of activities 30 and 32 is commenced is decided by a logical condition associated with the decision node 26. For example, whether or not a particular parameter of the system is greater or less than some predetermined value.
Figure 4 shows an activity diagram primitive that is called the merge node. Here, a merge node 34 describes the relationship between activities 36, 38 and 40. The merge node 34 indicates that activity 40 is commenced as soon as either one of activities 36 and 38 is completed.
Figure 5 shows an activity diagram primitive that is called the initial node. The initial node indicates the start of the system. Here, an initial node 42 indicates that the system begins with the performance of activity 44.
Figure 6 shows an activity diagram primitive that is called the final node. The final node indicates the end of the system. Here, a final node 46 indicates that the system ends after the performance of activity 48.

So far, nothing has been said about the nature of the activities that the primitives connect. These activities are almost infinitely diverse in nature. Often, an activity will be complex in the sense that it might be capable of being described by its own activity diagram. This document will discuss multiprocessor systems that are suitable for conducting wireless communications and in that context examples of activities are:
- carrying out a direct memory access (DMA) procedure for moving data from one place to another.
- performing a fast Fourier transform (FFT) on a digital time domain signal.
- performing a cross correlation of two digital time domain signals.
- calculating a cyclic redundancy checksum (CRC) for a data sequence.

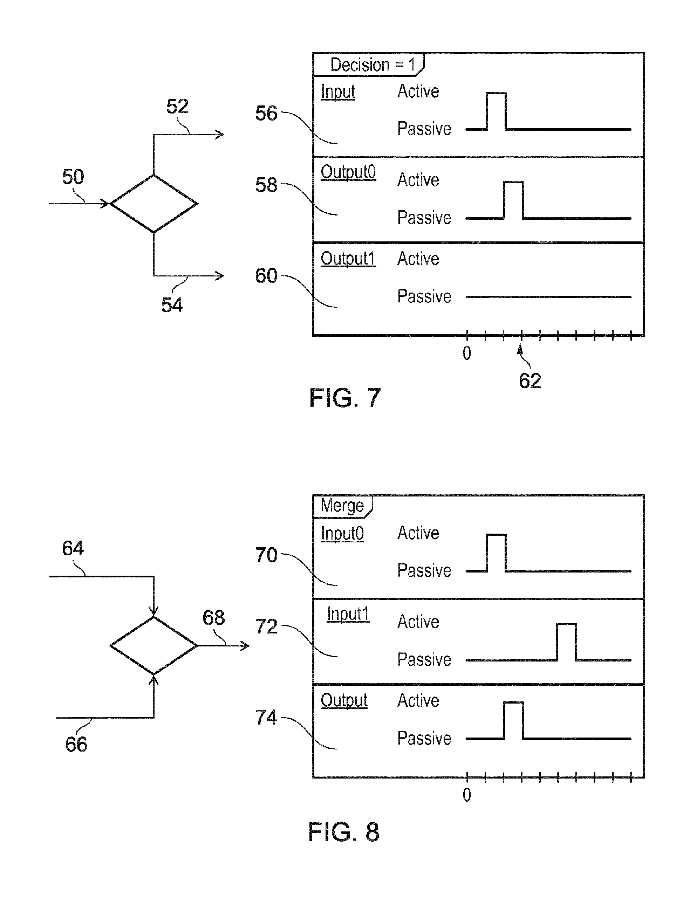

Figure 7 illustrates the signal flow associated with a decision node. The drawing shows the primitive's input 50 and its outputs 52 and 54. Alongside are shown three plots. Plot 56 shows the signals travelling on the input 50, plot 58 shows the signals travelling on output 52 and plot 60 shows the signals travelling on output 54. The time scale for all three plots is indicated at 62, and is indicated in arbitrary units (the same convention is used for the time scales in Figures 8, 9 and 10). As shown in plot 56, an event signal arrives on input 50 during the second time interval. The primitive responds in the third time period by putting an event signal on one of its outputs 52 and 54, as dictated by the state of the logical condition associated with the primitive. On this occasion, the state of the condition causes the event signal to be emitted on output 52, and nothing is sent on output 54.

Figure 8 illustrates the signal flow associated with a merge node. The drawing shows the primitive's inputs 64 and 66 and its output 68. Alongside are shown three plots. Plot 70 shows the signals travelling on input 64, plot 72 shows the signals travelling on input 66 and plot 74 shows the signals travelling on output 68. As shown in plot 70, an event signal arrives on input 64 during the second time interval. As shown in plot 72, an event signal arrives on input 66 during the sixth time period. As shown in plot 74, the primitive responds to the first event signal that it receives by putting an event signal on its output 68 in the third time period. The primitive does not send a further event signal on its output 68 in response to the later event signal that arrives on input 66.

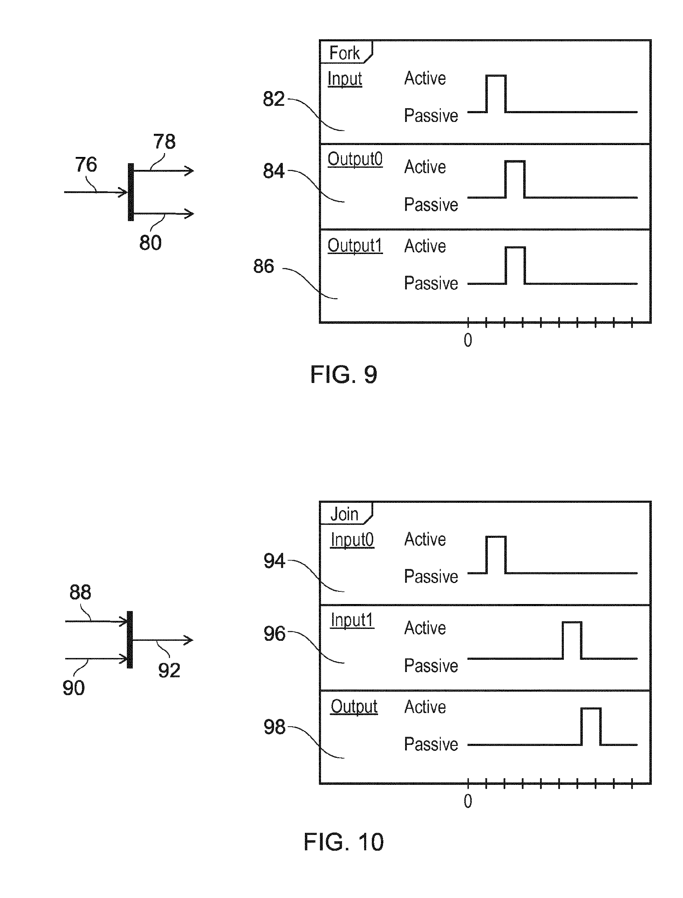

Figure 9 illustrates the signal flow associated with a fork node. The drawing shows the primitive's input 76 and its outputs 78 and 80. Alongside are shown three plots. Plot 82 shows the signals travelling on the input 76, plot 84 shows the signals travelling on output 78 and plot 86 shows the signals travelling on output 80. As shown in plot 82, an event signal arrives on input 76 during the second time interval. The primitive responds by putting event signals on both of its outputs 78 and 80 in the third time period.

Figure 10 illustrates the signal flow associated with a join node. The drawing shows the primitive's inputs 88 and 90 and its output 92. Alongside are shown three plots. Plot 94 shows the signals travelling on input 88, plot 96 shows the signals travelling on input 90 and plot 98 shows the signals travelling on output 92. As shown in plot 94, an event signal arrives on input 88 during the second time interval. As shown in plot 96, an event signal arrives on input 90 during the sixth time period. As shown in plot 98, the primitive responds only after each of its inputs 88 and 90 have received an event signal and the response is the emission of an event signal on its output 92 in the seventh time period.

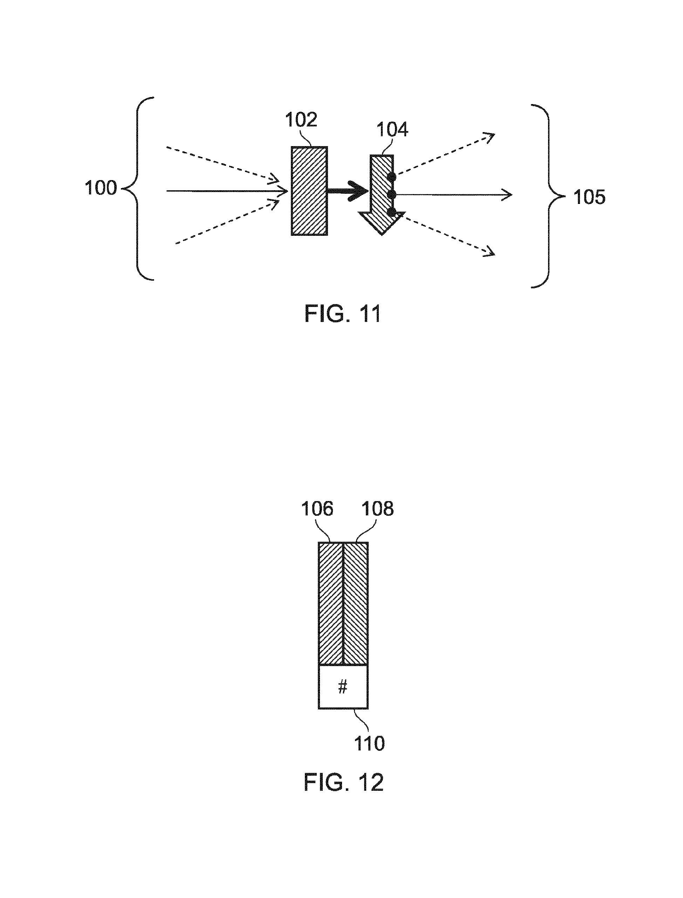

A feature common to the signal-based descriptions of Figures 7 to 10 is that in each case the UML activity diagram primitive can be implemented by a primitive that blocks the control flow until a certain number of event signals are received. As shown in Figure 11, it is therefore possible to represent a primitive as a barrier 102 that breaks after it has been hit by the right number of event signals 100 (each coming from a different source), triggering the performance of some instructions 104 that cause one or more event signals 105 to be issued (each to a respective destination).

Figure 12 shows a compacted format of the representation given in Figure 11, in which the barrier is represented by block 106, the instructions are represented by block 108 and the number of event signals that must hit the barrier 106 to trigger the performance of the instructions 108 is given by a number in block 110. For the remainder of this document, the compacted notation given in Figure 12 for representing a UML activity diagram primitive shall be referred to as the barrier-counter format (BCF) and the number indicating the number of event signals that have to hit the barrier before the instructions are performed shall be referred to as the count-down value. Note that if the count-down value is zero and an event signal is subsequently received then no action results.

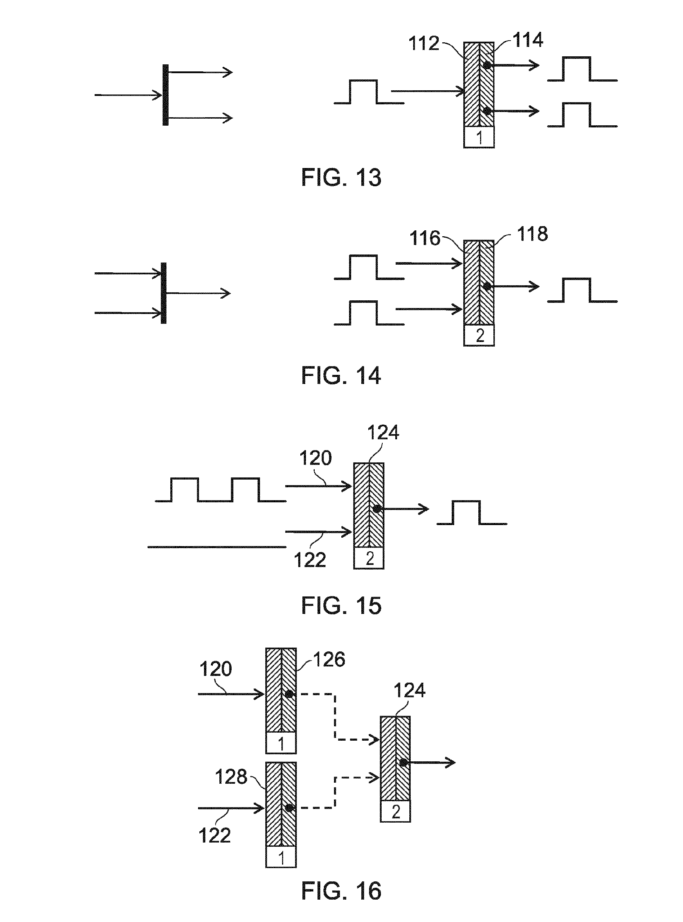

Figures 13 to 19 demonstrate how the BCF can be used in UML activity diagrams. Each UML primitive can be mapped into the BCF representation. This mapping steps from a high level representation to an implementation specific representation and is a task that typically can be carried out by a dedicated software compiler.

Figure 13 illustrates how the UML fork primitive can be implemented using BCF elements. The usual, UML activity diagram version of the primitive appears at the left of the figure, and the BCF version to the right. The count-down value is set to one so that the instructions 114 are performed once the barrier 112 has received one event signal. The instructions 114 specify that two event signals are emitted to respective destinations, e.g. to allow two concurrent activities to be triggered.

Figure 14 illustrates how the BCF can be used to implement a join primitive. The usual, UML activity diagram version of the primitive appears at the left of the figure, and the BCF version to the right. This time, the count-down value is set to two so that the instructions 118 are performed once the barrier 116 has received two event signals. The instructions 118 specify a single event signal to be emitted to a specific destination.

Figure 15 illustrates how the particular BCF version of the join primitive of Figure 14 might malfunction under certain conditions. Figure 15 shows the situation where two event signals are received on one input 120 of the BCF primitive and no event signals are received on the other input 122. This could happen where, for example, input 120 is connected to a timer that periodically sends out an event signal. In such circumstances, the BCF primitive 124 will emit an event signal even though a join primitive should not do so. The BCF primitive 124 malfunctions because it cannot distinguish whether or not event signals hitting its barrier have a common origin.

Figure 16 illustrates how the BCF version of the join primitive shown in Figures 14 and 15 can be modified to avoid the malfunction scenario presented in Figure 15. In Figure 16, two further BCF primitives 126 and 128 are added, each being interposed between the BCF primitive 124 and a respective one of the inputs 120 and 122. BCF primitives 126 and 128 are each given a count-down value of one whilst the count-down value of BCF primitive 124 remains as two. With this modification in place, BCF primitive 124 only emits an event signal after it has received an event signal from each of inputs 120 and 122, this being the correct behaviour of a join primitive.

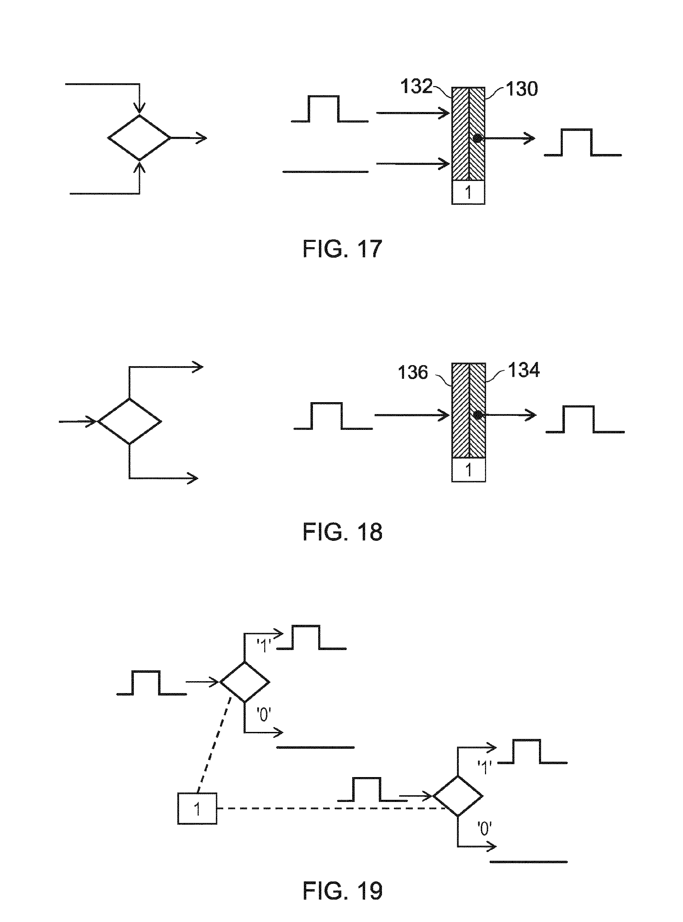

Figure 17 illustrates how the BCF can be used to implement a merge primitive. The usual, UML version activity diagram version of the primitive appears at the left of the figure, and the BCF version to the right. The count-down value is set to one so that the instructions 130 are performed after the barrier 132 has received just one event signal, irrespective of which input of the primitive conveys that signal.

Figure 18 illustrates how the BCF can be used to implement a decision primitive. The usual, UML version activity diagram version of the primitive appears at the left of the figure, and the BCF version to the right. The count-down value is set to one so that the instructions 134 are performed after the barrier 136 has received just one event signal. The instructions 134 specify a single event signal to be emitted to a specific destination, the destination being determined by the state of a logical condition specified in the instructions 134.

Figure 19 serves as a reminder that a single logical condition can be used to control more than one instance of the decision primitive.

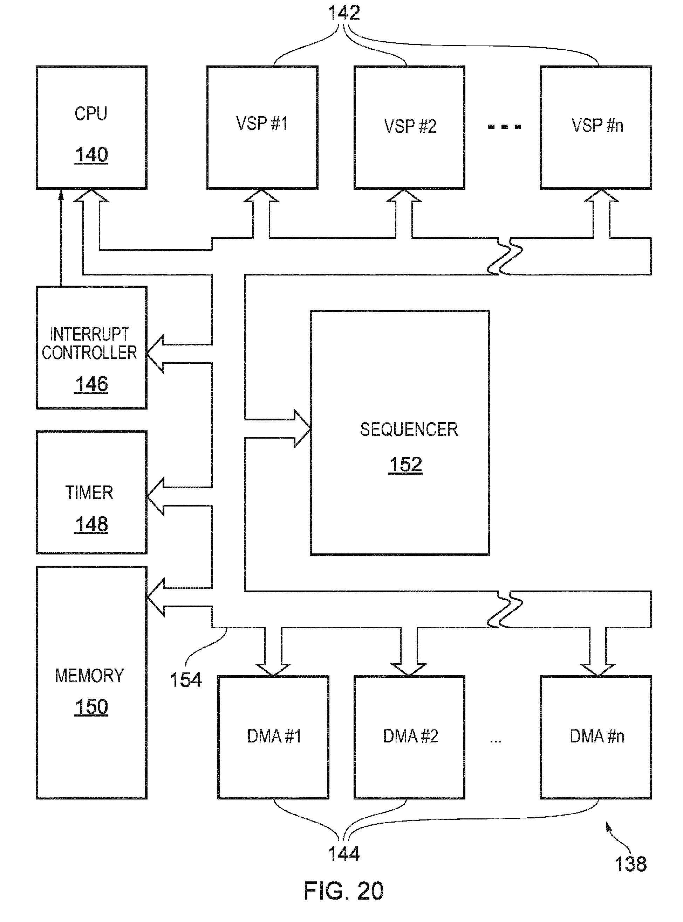

Figure 20 shows a multiprocessor computer 138. Only those elements that are useful for explaining the invention are shown and a person skilled in the field of computer architecture design will appreciate that in practice the computer 138 will include many more components and inter-component connections than are shown in Figure 20. As shown, the computer 138 comprises a central processing unit (CPU) 140, a number of vector signal processors 142, a number of DMA controllers 144, an interrupt controller 146, a timer 148, a memory 150 and a sequencer 152. So that these elements can communicate with one another they are all connected to a bus 154. Furthermore, the interrupt controller 146 is also connected to the CPU 140 by connection 156, over which it can send interrupts to the CPU. The architecture of computer 138 is scalable, for example in that the number of DMA controllers 144, the number of vector signal processors 142, the size of the memory 150 can all be varied and additional timers could be added.

The CPU 140 runs the operating system of the computer. For example, the CPU 140 is an ARM RISC processor. The VSPs 142 are DSPs that are multicore, their cores being designed to operate with very long instruction words (VLIW) that have single instruction, multiple data (SIMD) format. The memory 150 stores the instructions and the data that the computer is to process. The DMA controllers 144 allow instructions and data to be read from, and written to, the memory 150 by, for example, the VSPs 142 without burdening the CPU 140 with the conduct of the transfer process. The interrupt controller 146 is responsible for interrupting the CPU 140 over line 156 when external events such as user inputs need to be processed. The timer 148 emits a signal periodically and the other elements of the computer 138 use the signals from the timer as a time base to effect synchronisation of operations.

The central processing unit (CPU) 140, the vector signal processors 142 and the DMA controllers 144 are all capable of conducting processing in parallel with one another and shall henceforth be referred to as the processing elements of the computer 138. This parallelism is extended to a relatively high degree by the multicore nature of the VSPs 142 and yet further by the VLIW and SIMD capabilities of those cores. This relatively high degree of parallelism means that the architecture of computer 138 lends itself to conducting intensive digital signal processing activities, such as the execution in software of computationally intensive wireless telecommunications modems, such as those of the 3GPP-LTE (Third Generation Partnership Project - Long Term Evolution) and CDMA EV-DO (Code Division Multiple Access; Evolution - Data Optimised) standards. In order to extend the degree of parallelism, the computer 138 can also include additional processing elements connected to the bus 154, often designed to implement specific signal processing activities - such as a Viterbi accelerator, a turbo decoder and an RF to baseband interface.

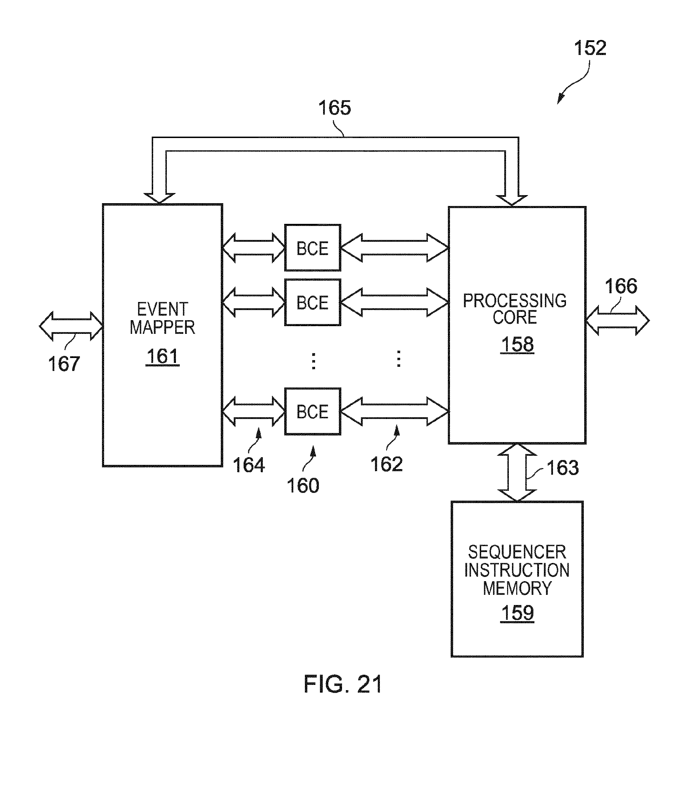

The sequencer 152 is shown in more detail in Figure 21. The sequencer 152 comprises a processing core 158, a sequencer instruction memory 159, a number of barrier-counter elements (BCEs), generally indicated 160, and an event mapping block 161.

Each of the BCEs 160 can communicate with the processing core 158 over a respective path, generally indicated 162. Each of the BCEs 160 can communicate with the event mapper 161 over a respective path, generally indicated 164. The processing core 158 and the event mapper 161 are connected to the bus 154 over respective paths 166 and 167. The processing core 158 retrieves its instructions from the sequencer instruction memory 159 over a path 163. In an alternative design, the a sequencer instruction memory 159 could be external to the sequencer 152 and accessed over the bus 154.

Each of the BCEs 160 can be programmed to implement a respective BCF primitive. The event mapper 161 translates end-of-activity hardware signals received over path 167 from the processing elements (e.g. VSPs 142 or DMA controllers144) into event signals that are passed to the BCEs 160 over the bus 164. The event mapper 161 is programmed by the processing core 158 over path 165. This translation ensures that an end-of-activity signal from a particular processing element is converted into an event signal that is sent to the particular one of the BCEs 160 that is implementing the BCF primitive that, in the UML activity diagram, follows the activity that the processing element in question has just completed.

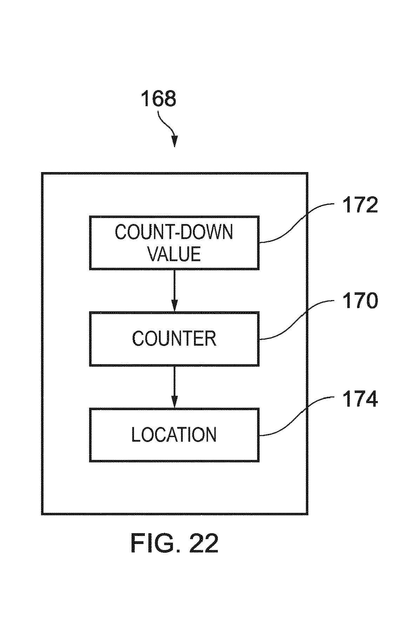

Each of the BCEs 160 has the same structure and this will be explained by reference to an exemplary BCE 168 that is shown in Figure 22. The fundamental elements of the exemplary BCE 168 are a counter 170 and two registers 172 and 174. Register 172 is loaded with the count-down value of the BCF primitive that the exemplary BCE 168 is to implement. Register 174 is loaded with an address in the memory 150 from which the processing core 158 can fetch the instructions that form part of the BCF primitive that the exemplary BCE 168 is to implement. Each time the exemplary BCE 168 receives an event signal, the counter 170 is decremented. When the counter 170 reaches zero, the address contained in register 174 is loaded into a register (not shown) in the processing core 158.

The processing core 158 is designed to react to this event by retrieving and performing a sequence of instructions that begins in the sequencer instruction memory 159 at the address that was received from register 174. These instructions cause the processing core 158 to send each of one or more destinations a respective signal. The nature of the signal that is sent depends on the nature of the destination:
- if the destination is another one of the BCEs 160, then the signal is an event signal intended for decrementing the counter of that further BCE. At UML activity diagram level, the BCF primitive represented by the exemplary BCE 168 is issuing an event signal to another BCF primitive (that is implemented by the destination BCE).
- if the destination is one of the processing elements of the computer 138, then the signal is a command to process a specified sequence of instructions. At UML activity diagram level, the BCF primitive represented by the exemplary BCE 168 is instigating the performance of an activity (which is carried out by the specified processing element performing the specified sequence of instructions).

This represents a slight departure from the definition of the BCF that was given in conjunction with Figure 12 because, according to that definition, a BCF primitive issues event signals, not commands. However, it must be remembered that the BCF is another way of representing a primitive in an activity diagram and that, in an activity diagram, the commencement of an activity is triggered by an event signal. In contrast, in the computer 138, an activity will be carried out by one of the processing elements and the relevant processing element must be sent a command that will cause that processing element to perform the instructions necessary to carry out the activity in question.

In summary then, the processing core 158 sends event signals to the BCEs 160 (which are implementing UML activity diagram primitives) and commands to processing elements (to perform UML activity diagram activities). A UML activity diagram primitive can receive an event signal from an activity to indicate completion of that activity. To cater for this, the processing elements in the computer 138 send, upon completion of assigned activities, event signals to the relevant ones of the BCEs 160. Most processing elements will send a hardware generated end-of-activity signal to the event mapper 161 that will send the event signal to the BCEs 160.

In a practical implementation of the sequencer 152, there will be a minimum of two BCEs 160 for each processing element in the computer 138, up to a maximum overall number of perhaps one thousand.

Five examples of how the exemplary BCE 168 can be used to implement specific UML activity diagram primitives in specific contexts will now be given.

For the first example, consider the case where the exemplary BCE 168 is to implement the fork primitive 10 shown in Figure 1 and assume that VSP #2 is performing activity 12, DMA controller #1 is to perform activity 14 and the CPU is to perform activity 16. The BCF version of the fork primitive is shown in Figure 13. Thus, the count-down value in register 172 is set as one. Upon completion of activity 12, VSP #2 sends an event signal to the exemplary BCE 168 and the counter decrements to zero causing the processing core 158 to perform the sequence of instructions specified by the address in register 174. This sequence of instructions sends a command signal to DMA controller #1 to start activity 14 and another command signal to the interrupt controller 146 to request the CPU 140 to start activity 16.

For the second example, consider the case where the exemplary BCE 168 is to implement the join primitive 18 shown in Figure 2 and assume that it is appropriate to use the simple version of the BCF join primitive that is shown in Figure 14. Also assume that DMA controller #1 is performing activity 20, the CPU 140 is performing activity 22 and VSP #2 is to perform activity 24. Thus, in order to implement the join primitive, the value stored in register 172 is two. Assume that DMA controller #1 completes activity 20 before CPU 140 completes activity 22. In this situation, the DMA controller #1 sends an event signal to the exemplary BCE 168 causing the counter 170 to decrement to one. Assume that, some time later, the CPU 140 completes activity 22 and sends an event signal to the exemplary BCE 168. This causes the counter to decrement to zero and causing the processing core 158 to perform the sequence of instructions specified by the address in register 174. This sequence of instructions sends a command signal to VSP #2 to start activity 24.

For the third example, consider the case where the exemplary BCE 168 is to implement the decision primitive 26 shown in Figure 3 and assume that VSP #2 is performing activity 28, DMA controller #1 is to perform activity 30 and DMA controller #2 is to perform activity 32. The BCF version of the decision primitive is shown in Figure 18. Thus, in order to implement the decision primitive, the value stored in register 172 is one and the address stored in register 174 is the location in memory 150 where the processing core 158 can find the beginning of a sequence of instructions that causes the logical condition associated with the decision primitive to be evaluated and a command signal to be sent to either DMA controller #1 to commence activity 30 or DMA controller #2 to commence activity 32, whichever is correct according to the state of the logical condition. When VSP #2 completes activity 28, it sends an event signal to the exemplary BCE 168, causing counter 170 to decrement to zero. This triggers the processing core 158 to perform the sequence of instructions specified by the address in register 174, which culminates in the commencement of activity 30 or 32, depending on the state of the associated logical condition.

For the fourth example, consider the case where the exemplary BCE 168 is to implement the merge primitive 34 of Figure 4 and assume that VSP #1 is to perform activity 36, the CPU 140 is to perform activity 38 and VSP #2 is to perform activity 40. The BCF version of the merge primitive is shown in Figure 17. Thus, the count-down value in register 172 is set to one. Assume now that VSP #1 completes activity 36 and sends an event signal to the exemplary BCE 168. The arrival of this event signal causes the counter 170 to decrement to zero and this triggers the processing core 158 to perform the sequence of instructions specified by the address in register 174. This sequence of instructions sends a command signal to VSP #2 to start activity 40. It then no longer matters when or if activity 38 completes.

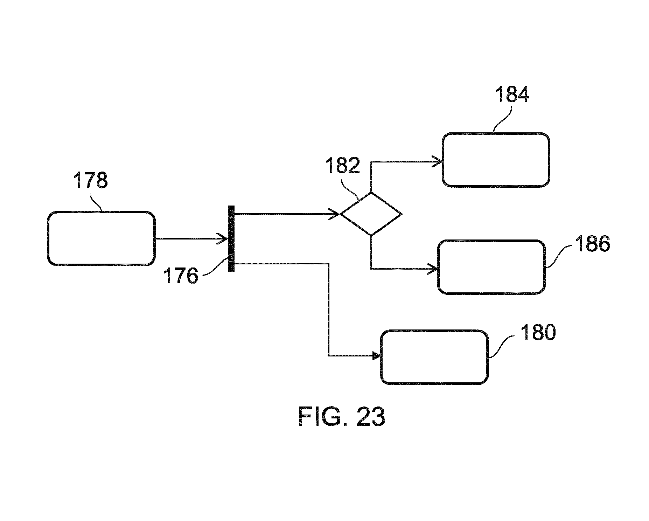

For the fifth example, consider the case where the exemplary BCE 168 is to implement the fork primitive 176 shown in Figure 23 and assume that VSP #2 is performing activity 178, DMA controller #1 is to perform activity 180 and another BCE is implementing the decision primitive which will ultimately initiative either activity 184 or activity 186. The BCF version of the fork primitive is shown in Figure 13. Thus, the count-down value in register 172 is set as one. Upon completion of activity 178, VSP #2 sends an event signal to the exemplary BCE 168 and the counter decrements to zero causing the processing core 158 to perform the sequence of instructions specified by the address in register 174. This sequence of instructions sends a command signal to DMA controller #1 to start activity 180 and an event signal - not a command signal - to the other BCE that is implementing the decision primitive 182.

It should therefore be apparent that the behaviour of a BCE is defined by its count-down value and the instruction sequence that is triggered when the BCE's counter decrements to zero. The combination of a BCE's count-down value and its instruction sequence shall henceforth be referred to as the BCE's "configuration". The configuration of a BCE can be set so that it fulfils the role of particular primitive at a particular location within a UML activity diagram.

The traditional approach to UML activity diagrams first requires an analyst to study a system that is proposed for implementation in software and produce a UML activity diagram describing the system. Then, a programmer is required to work from the UML activity diagram provided by the analyst in order to produce software that implements the system whilst complying with the constraints of the particular architecture of the computing hardware that is to execute the software. Through the use of sequencer 152, software implementing an activity diagram can now be created directly from a UML activity diagram. This is achieved by providing software code blocks for each activity in the UML activity diagram and by converting each primitive of the UML activity diagram into a corresponding BCF primitive that is implemented by a BCE that is given an appropriate configuration.

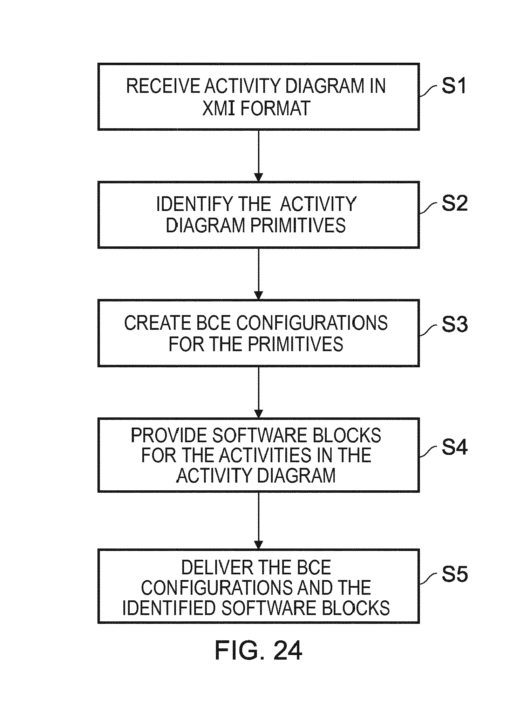

UML activity diagrams are normally created in XMI (XML (Extensible Mark-up Language) Metadata Interchange) format. Figure 24 is a flow chart describing a software tool for automatically generating a software package that can be executed by the sequencer 152 to implement a system that is described in an XMI format UML activity diagram. The tool is provided with knowledge of the architecture of the computer 138, e.g. the number of VSPs 142, the number of DMA controllers 144, the size of the memory 150, the processing speed of the various elements and the power consumption of the various elements. The tool is also provided with a library of software blocks, each for execution by one of the processing elements to perform one of the activities of the XMI UML activity diagram. The tool is also provided with indications of how long the software blocks take to execute on their respective processing elements.

In step S1, the XMI format UML activity diagram is provided. In step S2, the tool identifies the primitives in the XMI format UML activity diagram. In step S3, the tool creates individual BCE configurations for the primitives that it has identified. In step S4, the tool searches a library to identify for each activity of the activity diagram a software block that can be executed by one of the processing elements to perform that activity. The set of BCE configurations that is derived and the set of software blocks that is selected are arrived at by the tool taking into account any constraints that are specified for the power consumption of the computer 138 and the amount of time that the computer should take to perform the or some particular part of the system represented by the XMI UML activity diagram. In step S5, the tool delivers the BCE configurations and the identified software blocks as a software package that can be executed by the sequencer 152 to implement the system that is described by the XMI format UML activity diagram.

The sequencer 152 can then implement the system described by the XMI UML activity diagram in software by configuring its BCEs 160 with the configurations determined in step S3 so that the BCEs then command the processing elements to perform, when necessary, the identified software blocks identified in step S4.

The software tool can be enhanced if desired by also including one or more of the following features:
- the tool can assess whether the target architecture's processing elements can also accommodate the execution of an additional process besides the activities of the target system. It may be the case that the tool can in fact identify that the processing elements have sufficient spare capacity to execute not only the "thread" for the current UML activity diagram but also one or more additional threads each corresponding to software implementing a further UML activity diagram. In which case, the software tool can be arranged to rearrange the scheduling of the multiple threads on the processing elements, thereby implementing a form of virtualisation.
- the tool can be arranged to include break points in the generated software, at the start and end points of activities. These break points can then be shown in a graphical user interface (GUI) representation of the activity diagram and the performance of the software can then be assessed at the level of the activity diagram.

It will be apparent to persons skilled in the art of multi-processor system design that various modifications can be made to the technology described above without departing from the scope of the invention. For example, the BCEs 160 were described as counting down from a programmable value to zero in order to trigger the execution of code through the processing core 158. In an alternative implementation however, the BCEs 160 could be arranged to count up from zero until some programmable value is reached in order to trigger the code execution.

The concept of the sequencer 152 directing the operation of a group a processing elements that can operate in parallel can be used in computers that are intended for various different purposes. For example, the concept can be used in a computer that is intended to implement in software wireless communications modems, such as those from the 3GPP LTE and CDMA EV-DO standards.

Modem cellular handsets are almost universally required to operate in several modes. For example, operators who have both GSM and 3G spectrum assignments and operate networks according to the family of standards defined by the Third Generation Partnership Project (3GPP), prefer handsets to use their 3G infrastructure where coverage is available to obtain superior spectrum efficiency and therefore minimise operating costs; but to seamlessly operate on GSM (both in-call and when in "idle mode") in areas where the 3G network coverage is unavailable or congested. In some markets it is common for users to be customers of two networks and they require "double mode" handsets, that can "camp on" both networks simultaneously and hence receive and make calls or transmit and receive data on either. Such handsets have to operate on two interfaces that are essentially asynchronous. A final example is that most modem "smartphones" also have the capability to simultaneously communicate on wireless local area networks using the WiFi standards defined by the IEEE, whilst also using a cellular air interface (itself probably dual-mode 3G/GSM). It is desirable to minimise the amount of hardware that is used in a wireless handset to save cost and power consumption, and therefore it is preferable in an SDR implementation to use a common processing platform for multiple, asynchronous standards. Once such a capability is provided, it is desirable also to be able to update the device subsequent to manufacture, for example after sale when the user roams to a territory where a different standard is in use, by downloading new software and have this execute seamlessly in the device.

Therefore, it is desirable to provide for asynchronous operation of different protocols which do not require interactions between them to be considered, and where both protocols are processed using independent software instances on a common processing platform.

### Summary

The invention is defined by the appended claims, to which reference should now be made.

### Brief description of the drawings

By way of example only, various embodiments of the invention will now be described by reference to the accompanying drawings, in which:
Figure 1 is a UML activity diagram illustrating use of the fork node;
Figure 2 is a UML activity diagram illustrating use of the join node;
Figure 3 is a UML activity diagram illustrating use of the decision node;
Figure 4 is a UML activity diagram illustrating use of the merge node;
Figure 5 is a UML activity diagram illustrating use of the initial node;
Figure 6 is a UML activity diagram illustrating use of the final node;
Figure 7 illustrates the signal flow associated with a decision node;
Figure 8 illustrates the signal flow associated with a merge node;
Figure 9 illustrates the signal flow associated with a fork node;
Figure 10 illustrates the signal flow associated with a join node;
Figure 11 is a conceptual diagram of a modified form of UML activity diagram primitive;
Figure 12 illustrates a compacted notation for the modified primitive of Figure 11;
Figure 13 illustrates how the compacted notation of Figure 12 can be used to represent a fork primitive;
Figure 14 illustrates how the compacted notation of Figure 12 can be used to represent a join primitive;
Figure 15 illustrates how the modified primitive used in Figure 14 might malfunction under certain conditions;
Figure 16 illustrates how several primitives of the modified form given in Figure 11 can be used together to represent a join primitive in a way that avoids the malfunction scenario presented in Figure 15;
Figure 17 illustrates how the compacted notation of Figure 12 can be used to represent a merge primitive;
Figure 18 illustrates how the compacted notation of Figure 12 can be used to represent a decision primitive;
Figure 19 illustrates how a single logical condition can be used to control more than one instance of the decision primitive;
Figure 20 illustrates schematically a multiprocessor computer;
Figure 21 illustrates schematically the sequencer of Figure 20;
Figure 22 illustrates schematically a barrier-counter element of Figure 21;
Figure 23 illustrates an activity diagram where a primitive can trigger another primitive;
Figure 24 illustrates the operation of a tool for generating software that can be executed using the sequencer of Figure 20;

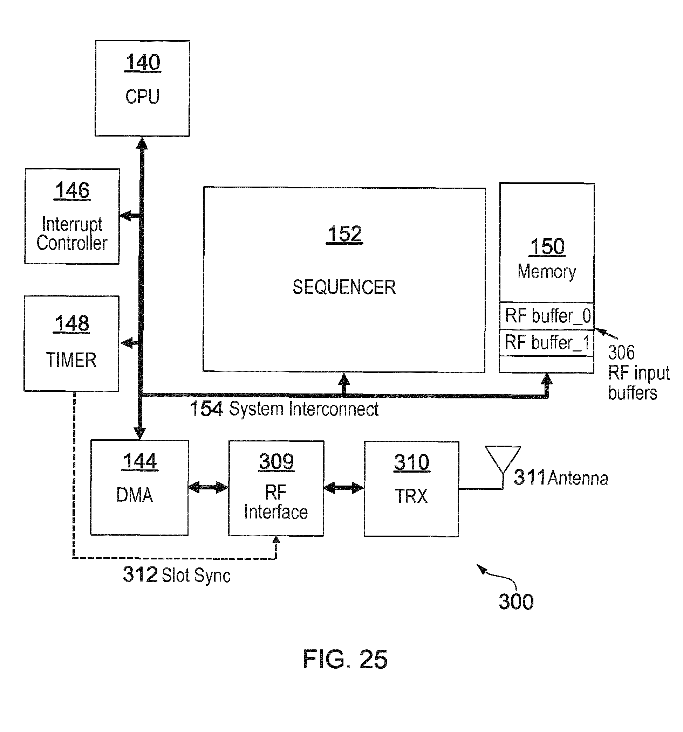

Figure 25 illustrates schematically a mobile telephone in which has been embedded a multiprocessor computer like that shown in Figure 20;

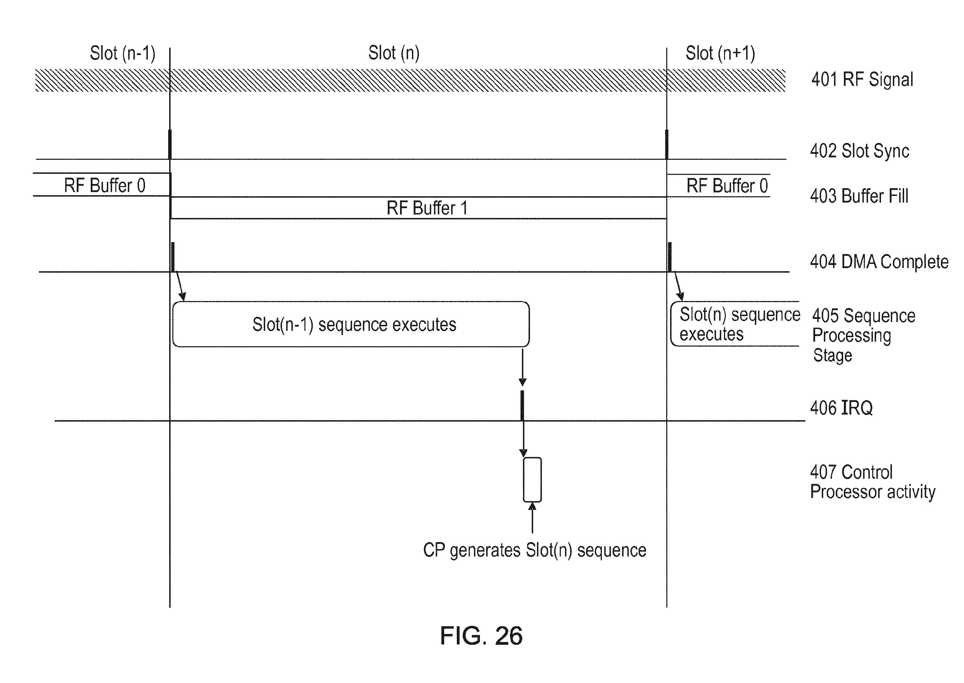

Figure 26 is a timing diagram illustrating the performance of tasks undertaken within the mobile telephone of Figure 25;

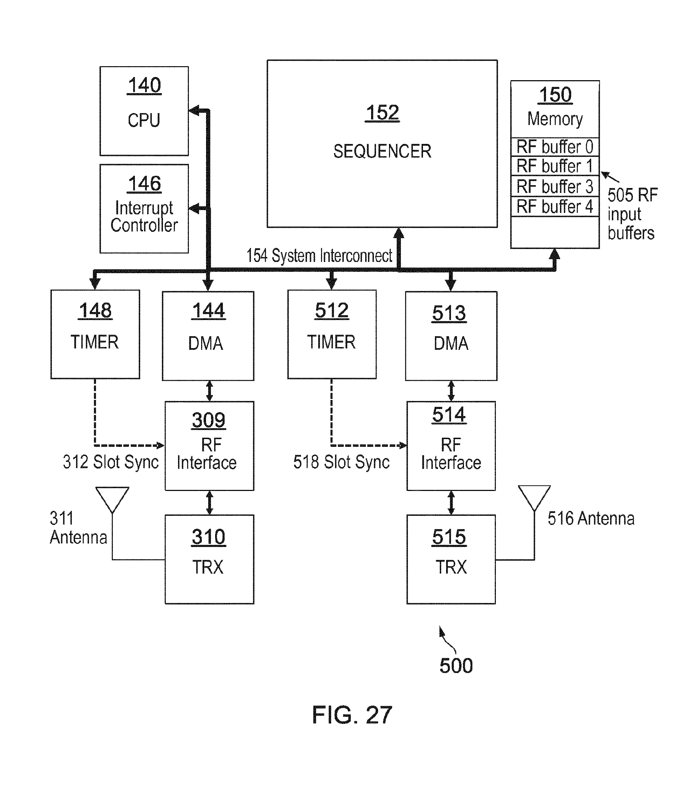

Figure 27 schematically illustrates a variant of the mobile telephone of Figure 25;

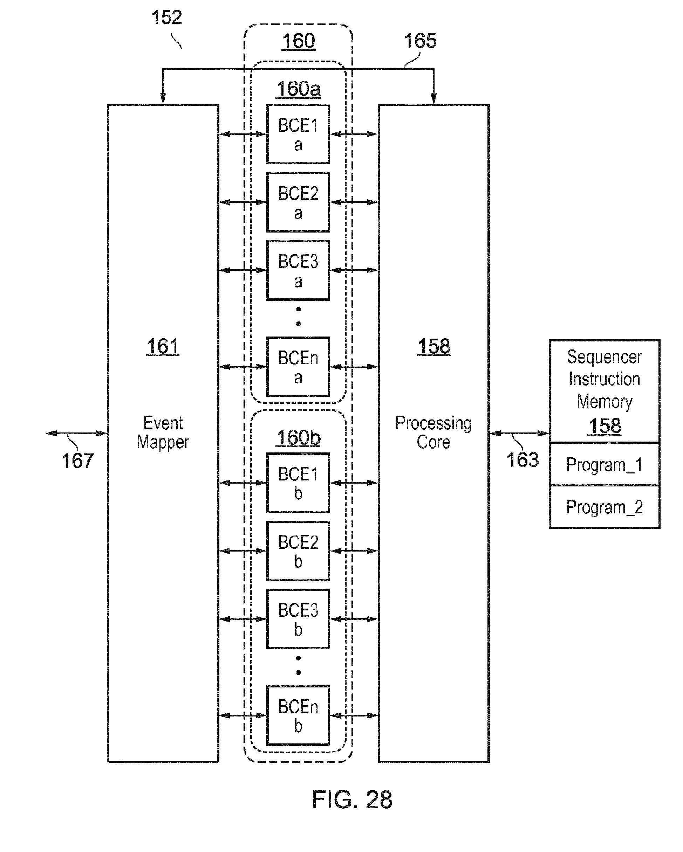

Figure 28 schematically illustrates how resources within the sequencer of Figure 21 can be partitioned; and

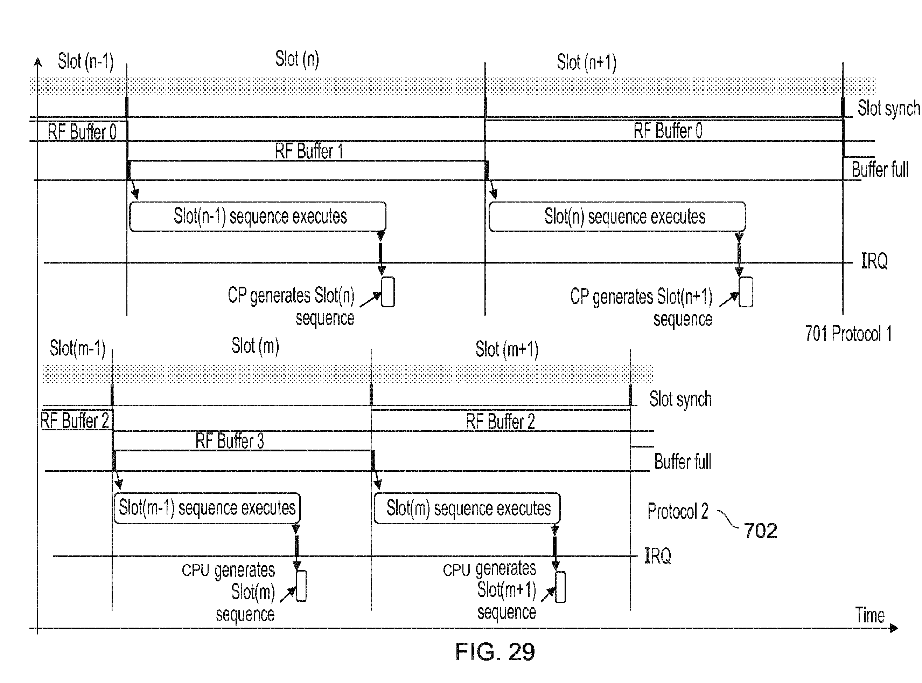

Figure 29 is a timing diagram illustrating the performance of tasks undertaken within the mobile telephone of Figure 27.

### Detailed description

Figure 25 shows a mobile telephone 300 in which the multiprocessor computer 138 has been embedded. Only those elements that are useful for explaining the invention are shown in Figure 25 and a person skilled in the field of computer architecture design will appreciate that in practice the telephone 300 will include many more components and inter-component connections than are shown in Figure 25. In fact, Figure 25, for the sake of clarity, shows only those elements from Figure 20 that are necessary to describe how the multiprocessor computer 138 operates in the context of the telephone 300. For the sake of brevity, elements in Figure 25 that have been retained from Figure 20 keep the same reference numerals in Figure 25 and the description of the nature and function of those elements will not be repeated here.

In addition to elements retained from Figure 20, the telephone 300 is shown as including an RF interface 309, a radio transceiver (TRX) 310 and an antenna 311. The exemplary case is where the multiprocessor computer 138 is used to implement a modem that enables the telephone 300 to use a time-slotted downlink (base-to-mobile) protocol. The DMA controller 144 communicates with the RF interface 309 which in turn is coupled to the radio transceiver (TRX) 310 which uses the antenna 311 to communicate via an air interface such as cellular or WiFi. The RF interface 309 receives slot synchronisation signals 312 directly from the timer 148. In the memory 150, two areas 306, namely buffer_0 and buffer_1 are reserved as buffers for received, digitised RF samples. Each of these buffers is sufficient for a full slot of received data, and they are used alternately for "odd" and "even" slots.

Figure 26 is a timing diagram showing how events are coordinated. An RF signal 401 is a continuous data-modulated carrier wave which is notionally divided into timeslots. At the notional slot boundary between Slot(n-1) and Slot(n) a slot sync pulse 402 on the signal line 312 triggers the RF interface to start to fill buffer_1 with data samples, whilst buffer_0 is already full of samples acquired during the previous Slot(n-1). The DMA controller 144 generates a DMA complete signal 404 indicating that a full buffer of samples is available from Slot(n-1), which triggers the sequencer 152 to start executing a ready-stored sequence program, loaded during the previous slot, that directs the various processing resources in the computer 138 to process the acquired data from buffer_0. At the end of the sequence, the sequencer 152 generates an Interrupt Request (IRQ) signal 406 which is directed to the CPU 140, causing it to generate 407 the sequencer program required to process Slot(n) data stored in buffer_1 and load that program into the memory 150. Frequently, this will be the same program that has just been executed, though the BCEs 160 of the sequencer 152 will need to be re-initialised, but the sequence in the next slot may be different, depending, for example, on data that has been received and decoded.

One aspect not apparent from the operations described so far is how the system ensures that the Slot Sync signals 402 are synchronous with the real slot boundaries in the received signal. This may be achieved for example by having a type of sequence which is specifically designed for synchronisation, which looks for a known pattern in the received data and calculates a time offset between the position of the pattern and the sync pulses. It would then program the timer 148 with this offset to achieve initial synchronisation, and subsequent sequences would include an operation to monitor the on-going time offset and send corrections to the timer 148.

Though in Figure 26 sequence execution in stages 405 (to process a slot's worth of data) and 407 (to generate the sequence that is to be used to process received data in the following slot) is shown as a single activity with a significant duration relative to a slot, most of the time-consuming activities are carried out by the processing resources of the system such as the VSPs 142 (which have been omitted from Figure 25 for the sake of clarity). The sequencer 152 only has to take action when triggered by an event, and the action required takes only a few cycles of a high-frequency system clock. Thus the sequencer 152 is a lightly-loaded hardware engine. It will also be appreciated that the sequencer 152 must be designed to cope with events from different and potentially unrelated sources, such as different processing elements completing tasks at the same time, that arrive substantially simultaneously, and to correctly register these with the appropriate BCEs 160.

It can be seen from the foregoing description of the timing diagram of Figure 26 that the CPU 140 activity in processing the system as described is potentially minimal since the CPU 140 may only be required, once per slot, to find the appropriate sequence program for the next slot and load that sequence into the memory 150 for use by the sequencer 152. Since this activity is triggered by an interrupt, and since the CPU 140 will typically be a type such as an ARM RISC core which fully supports interrupts, additional tasks can be run in the CPU 140. Such task would usually be of a lower priority nature but the CPU 140 may be used for other, higher priority tasks (such as, for example, one that is required as part of the sequence of stage 405 itself), provided, of course, that the CPU 140 is in fact capable of completing these in time.

Figure 27 shows a mobile telephone 500 that is a variant of telephone 300 that can use two air interfaces simultaneously. For the sake of brevity, elements in Figure 27 that have been retained from Figure 25 keep the same reference numerals in Figure 27 and the description of the nature and function of those elements will not be repeated here. In addition to the elements provided in Figure 25, telephone 500 includes a second timer 512, a second DMA controller 513, a second RF interface 514, a second TRX 515, and a second antenna 516.

These additional elements 512-516 are of course provided for the purpose of allowing the telephone to communicate over a second air interface that may or may not be different to the air interface that is used with antenna 311. The timer 512 is autonomous and may run at a different frequency from Timer 148. The RF interface 514 and the DMA controller 513 read data from the second TRX 515, which may be associated with a different frequency band and air interface protocol from the first RF chain 309-311. Data from the second RF chain 514-516 is written in the same way as the first in an alternate fashion into RF buffers buffer_2 and buffer_3 505, which are in distinct areas of memory from buffer_0 and buffer_1 505.

The telephone 500 also uses the sequencer 152 in a somewhat different manner (without however changing its configuration), as is shown in Figure 28. The sequencer 152 now runs two programs, denoted program_1 and program_2 in Figure 28, which are for performing the sequences required for RF chains 309-311 and 514-516, respectively. The BCEs 160 are now treated as being divided into disjoint groups 160a and 160b; and the sequencer instruction memory 158 as having disjoint areas for program_1 and program_2. BCE groups 160a and 160b are respectively associated with program_1 and program_2. It will be apparent that though these BCEs and program memory areas are disjoint and may be separately defined and associated with separate sequences, in operation the sequencer 152 can execute both sequences in parallel provided that tasks are assigned to different processing elements. The BCEs can be divided into groups according to any algorithm. For example, the BCEs may be divided into two groups arbitrarily, or split evenly between the groups. Thus, where there are two groups (as in the illustrated embodiment) the BCEs may be split between the groups in a 50:50 relationship.

Figure 29 is a timing diagram showing how the multiprocessor computer 138 behaves in the context of telephone 500. One air interface 701 is running at a lower slot timing rate than the second 702. As both air interfaces use separate hardware for acquiring data they can coexist in the same system. Equally, because each uses disjoint resources in the sequencer 152, and the sequencer must be able to correctly resolve simultaneous events, the sequences can be correctly controlled even though they are asynchronous, provided that they do not try to use the same processing resources at the same time.

It will be apparent that, because the slot structures shown in Figure 29 are individually isochronous yet asynchronous with each-other, from time to time the IRQ signals to the CPU 140 will overlap. However it is common for Interrupt Controllers to be designed to arbitrate in such an event to ensure correct operation. A more serious problem is that when a sequence is generated by the CPU 140 for processing a subsequent slot in one air interface, it may use processing resources already allocated to or required by processing in the other air interface. One method to solve this problem is for the separate sequence programs to be written in advance to use separate and disjoint sets of processing resources - this however will mean that opportunities to share resource between the protocols cannot be exploited. Additional scheduling means may be provided in the CPU, which has knowledge of both resources by virtue of loading the sequences which are executed; or separate means may be provided.

It will be apparent to the skilled person that various modifications can be made to the embodiments of the invention that are described above. For example, there might be more than two RF transceiver chains, each with its own reserved, disjoint group of BCEs and its own reserved, disjoint memory area for holding instructions that need to be performed when its BCEs are triggered.

Although the embodiments described above use the exemplary situation of processing received down link signals, the described schemes for partitioning the resources of the sequencer 152 can be used for other activities, such as conducting different uplink communications in the two transceiver chains. In a more general sense, it is to be understood that the precise nature of the tasks to which the partitions of the sequencer 152 are dedicated is immaterial. For example, the tasks could be processes unrelated to telecommunications.

## Claims

1. A computer that is suitable for executing a software implementation of a unified modelling language activity diagram, wherein the diagram comprises a plurality of activities that are connected by primitives that are triggered by, and emit, event signals, and the computer comprises:
a) a plurality of processing elements that can conduct processing in parallel with one another, each processing element being capable of performing at least one of said activities;
b) a sequencer that is arranged to implement the primitives and which comprises:
b1) detecting means for detecting that a primitive has received the event signal, or signals, necessary for it to trigger; and
b2) signalling means arranged to respond to the detection of the triggering of a primitive by giving a response that is at least one of:
b2a) instructing a processing element to perform an activity that, in the diagram, is the recipient of an event signal from the triggered primitive; and
b2b) sending to the detecting means an event signal for another primitive;
wherein:
c) the detecting means comprises a plurality of detection elements;
d) each detection element is capable of detecting that a respective primitive has received the event signal or signals necessary for it to trigger and of informing the signalling means that the respective primitive has been triggered; and
e) the computer is arranged to reserve a first group of the detection elements for the performance of a first task and to reserve a second, disjoint group of the detection elements for the performance of a second task that overlaps in time with the first task.

2. A computer according to claim 1, further comprising memory means that is arranged to hold in a first area instructions that are to be performed by the signalling means when detection elements of the first group are triggered and in a second, disjoint area instructions that are to be performed by the signalling means when detection elements of the second group are triggered.

3. A computer according to claim 2, wherein the signalling means comprises a processing core that reacts to an indication that a primitive of one of the first and second groups has been triggered by performing a sequence of instructions in the respective one the first and second areas that is linked to that primitive and which causes the core to make said response.

4. A computer according to any one of the preceding claims, wherein each detection element comprises a counter for counting the event signal or signals that are needed to trigger its respective primitive.

5. A computer according to any one of the preceding claims, wherein at least one detection element is capable of being reconfigured by the sequencer to implement another primitive after it has been triggered.

6. A computer according to any one of the preceding claims, wherein the processing elements comprise two or more of a vector signal processor, a central processing unit, a Viterbi accelerator, a turbo decoder, a digital interface to external radio transceivers, and a direct memory access controller.

7. A computer according to any one of the preceding claims, wherein the first and second tasks are asynchronous.

8. A radio communications device, comprising the computer of any one of the preceding claims, comprising at least one radio frequency processing chain for receiving radio signals that are to be processed by the first and second tasks.

9. A radio communications device according to claim 8, wherein there is a respective radio frequency processing chain for each of the first and second tasks.

10. A radio communications device according to claim 8 or 9, wherein the radio communications device is one of a mobile telephone, a smart phone or a tablet computer.
